## Europäisches Patentamt
## European Patent Office
## Office européen des brevets

(19)

(11) Veröffentlichungsnummer: **0 008 416**
B1

(12)

# EUROPÄISCHE PATENTSCHRIFT

(45) Veröffentlichungstag der Patentschrift:
03.03.82

(51) Int. Cl.³: **H 04 L 11/16, G 06 F 3/04**

(21) Anmeldenummer: **79102887.1**

(22) Anmeldetag: **09.08.79**

(54) **Anordnung zum Übertragen von digitalen Datensignalen.**

(30) Priorität: **25.08.78 DE 2837214**

(43) Veröffentlichungstag der Anmeldung:
**05.03.80 Patentblatt 80/5**

(45) Bekanntmachung des Hinweises auf die Patenterteilung:
**03.03.82 Patentblatt 82/9**

(84) Benannte Vertragsstaaten: —
**AT BE CH DE FR GB NL**

(56) Entgegenhaltungen:
**DE-A-2 232 193**
**DE-A-2 620 493**
**US-A-3 978 451**

**ELEKTRONIK, Band 25, 1975, Heft 5 München (DE)**
**KLAUS: «Wie funktioniert der IECBUS?», Seiten 73–78**

(73) Patentinhaber: **SIEMENS AKTIENGESELLSCHAFT Berlin und München, Postfach 22 02 61, D-8000 München 22 (DE)**

(72) Erfinder: **Janetzky, Dittmar, Dipl.-Ing., Bert-Brecht-Strasse 12, D-7500 Karlsruhe (DE)**

ACTORUM AG.

## Anordnung zum Übertragen von digitalen Datensignalen

Die Erfindung betrifft eine Anordnung zum Übertragen von digitalen Datensignalen gemäss dem Oberbegriff des Anspruchs 1.

In den deutschen Auslegeschriften 2 147 995 und 2 315 598 sowie der Zeitschrift «Elektronische Rechenanlagen» 1969, Heft 3, Seiten 151 bis 161 sind Anordnungen und Verfahren zur Datenübertragung beschrieben, bei denen über jeweils gesonderte Leitungen Anforderungs-, Daten-, Quittungs- und Bereitschaftssignale übertragen werden. Sie erfordern daher eine Vielzahl von Leitungen.

In der DE-OS 2 620 493 ist ein Verfahren zum Übertragen von Daten zwischen einer Steuereinheit und einer oder mehreren Teilnehmerstationen beschrieben, bei dem drei Steuersignale verwendet werden. Mit der Vorderflanke des ersten Steuersignals wird ein Übertragungszyklus und die Übernahme von Adressen eingeleitet, deren Übernahme mit der Vorderflanke des zweiten Steuersignals von der angesprochenen Teilnehmerstation quittiert wird. Nach der Quittierung der Adressen werden diese zurückgenommen und Daten auf den Übertragungskanal geschaltet, die mit der Rückflanke des ersten Steuersignals für gültig erklärt werden. Die Übernahme der Daten wird durch die Vorderflanke des dritten Steuersignals quittiert, mit dessen Rückflanke der Übertragungszyklus beendet wird. Gleichzeitig wird das zweite Steuersignal zurückgenommen. Die Datenübertragung von der Steuereinheit zu einer Teilnehmerstation geschieht mit Hilfe eines anderen Übertragungszyklus als die Datenübertragung in umgekehrter Richtung. Steuereinheit und Teilnehmerstation, die unterschiedlich aufgebaut sind, sind daher nicht gleichberechtigt.

In der US-Patentschrift 3 978 451 ist eine Anordnung zum Steuern der Datenübertragung zwischen mehreren an gemeinsame Daten- und Steuerleitungen angeschlossenen Teilnehmerstationen beschrieben, in der die Anzahl der gemeinsamen Steuerleitungen ebenfalls drei ist. Die drei Steuersignale, die teils nacheinander, teils gleichzeitig aufgeschaltet bzw. zurückgenommen werden, zeigen an, dass eine Station Daten sendet, dass die auf die Datenleitungen geschalteten Daten übernommen werden können, dass sie übernommen sind und weitere Daten gesendet werden können.

Die DE-OS 2 232 193 beschreibt eine Anordnung zum Informationsaustausch zwischen zwei datenverarbeitenden Moduln. Insgesamt sind vier Steuerleitungen vorhanden, zwei für die Datenübertragung von einer Zentraleinheit zu einer peripheren Einheit und zwei für die Übertragung in entgegengesetzter Richtung. Der Anschluss von mehreren peripheren Einheiten ist nicht vorgesehen.

In der Zeitschrift «ELEKTRONIK», Band 24; 1975, Heft 4, Seiten 72 bis 78 und Heft 5, Seiten 73 bis 78 ist eine Übersicht über die Verkettung von digitalen Ein-/Ausgabegeräten über Sammelleitungen gegeben. In Heft 4, Seiten 77 und 78 ist erläutert, dass für die Zusammenschaltung von zwei Geräten ein sogenanntes Zweidraht-Hand-Shake möglich ist, d.h. es genügen zwei Steuerleitungen, wenn nach dem Quittungsprinzip Daten zwischen zwei Geräten übertragen werden sollen, dass aber bei Zusammenschaltung von mehr Geräten ein Dreileiter-Hand-Shake erforderlich ist. Beim Zweidraht-Hand-Shake-Verfahren schaltet die sendende Teilnehmerstation nach Ausgabe der Daten ein Anforderungssignal auf eine erste Steuerleitung, auf welches die empfangende Station die Daten übernimmt. Diese meldet die Übernahme durch Aufschalten eines Quittungssignals auf eine zweite Leitung, nach deren Empfang die sendende Station Anforderungssignal und Daten zurücknimmt. Auf die Rücknahme des Anforderungssignals nimmt die Empfangsstation das Quittungssignal zurück, sofern die Datenübernahme abgeschlossen ist, und der nächste Übertragungszyklus kann eingeleitet werden. Sollen die Daten von mehreren Stationen empfangen werden, kann der Fall eintreten, dass eine erste Empfangsstation das Quittungssignal zurücknimmt und darauf die sendende Station die nächsten Daten aufschaltet, während noch eine zweite Empfangsstation mit der Übernahme beschäftigt ist und die neuen Daten nicht aufnehmen kann. Um diesen Störfall zu vermeiden, ist beim sogenannten Dreileiter-Hand-Shake-Verfahren eine dritte Leitung vorgesehen, auf welche die Stationen, die für eine Datenaufnahme bereit sind, ein Bereitschaftssignal geben. Nur dann, wenn alle Stationen dieses Bereitschaftssignal auf die dritte Leitung schalten, kann die sendende Station ein neues Datum auf die Datenleitungen geben.

In der genannten Literaturstelle «ELEKTRONIK» ist weiter angegeben, dass die Steuersignale auf der Sammelleitung nach einer ODER-Bedingung verknüpft sind, damit die Steuersignale von einer oder einer anderen Station aufgeschaltet werden können.

Der vorliegenden Erfindung liegt die Aufgabe zugrunde, die Schaltungsanordnung zum Übertragen von digitalen Datensignalen nach dem Oberbegriff des Patentanspruchs 1 so auszubilden, dass sie sich durch eine besonders geringe Anzahl von Steuerleitungen auszeichnet.

Erfindungsgemäss wird diese Aufgabe mit den im kennzeichnenden Teil des Anspruchs 1 angegebenen Massnahmen gelöst.

Die Teilnehmerstationen können die in der Fernwirktechnik und der Datenverarbeitung üblichen sein, z.B. Unterstationen von Fernwirkanlagen, Rechner, Datenspeicher oder auch Geräte zur Fernübertragung, welche die Signale von der Daten- und Steuerleitung aufnimmt, umsetzt und über einen oder zwei Kanäle, z.B. eine Telefonleitung, überträgt bzw. Signale von solchen Kanälen aufnimmt und sie in die Daten- und Steuerleitungen einspeist. Werden die Datensignale auf den Datenleitungen seriell übertragen, so werden sie vorteilhaft von den Teilnehmerstationen in eine solche Form gebracht, dass sie von den Geräten zur Fernübertragung unverändert, wenn auch mit verringerter Datenrate, übertragen werden können.

Die Synchronisation der Taktgeber ist so getroffen, dass der langsamste Taktgeber die Frequenz des Taktsignals auf der Taktleitung bestimmt. Dies ist z.B. in dem Falle von Bedeutung, dass eine Teilnehmerstation, z.B. ein Gerät zur Fernübertragung, die Daten nur mit geringer Geschwindigkeit aufnehmen oder in die Daten- und Steuerleitung einspeisen kann. Durch Verzögerung ihres eigenen Taktgebers kann sie erreichen, dass das jeweils nächste Datensignal von der sendenden Station erst dann auf die Datenleitung geschaltet wird, wenn sie für den Empfang dieser Daten bereit ist. Das Taktsignal wirkt daher sowohl als Anforderungs- wie als Quittungs- und Bereitschaftssignal, und zwar in der Weise, dass mit seiner Vorderflanke die auf die Sammelleitung geschalteten Daten für gültig erklärt werden, dass während seiner Dauer gemeldet wird, dass mindestens eine Station, in der Regel diejenige, zu der die Daten gesandt werden, nicht zur Aufnahme von Daten bereit ist, und dass die Rückflanke der Taktimpulse die Übernahme und das Fehlen eines Taktimpulses die Bereitschaft aller Teilnehmerstationen zur Aufnahme von Daten signalisiert.

Die Synchronisation der Taktgeber wird in der Weise erzwungen, dass die Taktgeber in einer bestimmten Taktphase so lange gesperrt sind, bis alle Taktgeber dieselbe Taktphase erreicht haben. Hierzu bildet die Taktleitung zusammen mit den die Taktsignale in die Leitung einspeisenden Elementen ein ODER- oder ein Koinzidenzglied. Die von dem Signal auf der Taktleitung gesteuerten Taktgeber sind somit so lange gesperrt, wie ein Taktgeber, z.B. der Daten aufnehmende, noch Sperrsignal auf die Taktleitung gibt. Das auf der Taktleitung erscheinende Signal kann daher sowohl durch UND- als auch durch ODER-Verknüpfung der Taktsignale gebildet sein. Geeignete Taktgeber sind die bekannten astabilen Multivibratoren.

Werden nicht nur die Taktsignale, sondern auch die Datensignale nach einer ODER- bzw. UND-Verknüpfung auf die Datenleitung geschaltet, kann jede Teilnehmerstation zu jeder Zeit, also auch dann, wenn zwischen ihr und einer anderen Station gerade keine Daten übertragen werden, Meldesignale aufschalten. Damit die laufende Datenübertragung nicht gestört wird, sollte dies nur zu bestimmten, festgelegten Zeiten möglich sein. Jede Teilnehmerstation empfängt die Meldungen, z.B. dass Daten von einer ersten zu einer zweiten Station übertragen werden sollen. Die empfangenen Meldungen werden in Melderegister eingetragen, die in den Teilnehmerstationen enthalten sind.

Nach einer Weiterbildung der Erfindung werden die Daten in Sätzen mit jeweils vorbestimmter Länge übertragen. Jede Teilnehmerstation enthält einen Zähler, der die Taktimpulse aufsummiert und mit Beginn der Übertragung eines Satzes gestartet wird. Bei bestimmten Zählerständen ist die Teilnehmerstation zum Aufschalten der Meldesignale auf die Datenleitung freigegeben. Diese Zählerstände entsprechen den festgelegten Zeiten für das Aufschalten von Meldungen auf die Datenleitungen.

Die Zeiten, in denen Meldungen übertragen werden dürfen, können auch mit Hilfe von Begleitsignalen bestimmt werden, die parallel zu den Datensignalen auf die Daten- und Steuerleitungen geschaltet werden. Je nach Zustand des Begleitsignals bedeuten die auf der Datenleitung stehenden Signale entweder Meldungen oder andere Informationen.

Liegen die Teilnehmerstationen räumlich weit auseinander, so tritt das Problem auf, dass die Leitungskapazitäten eine Datenübertragung mit hoher Frequenz verhindern. Mit einfachem Einschalten von Verstärkern ist dieses Problem nicht zu vermeiden, da sonst diese Verstärker in beiden Richtungen wirksam sein müssten und daher Mitkopplungen und Schwingungen auftreten würden. Nach einer weiteren Ausgestaltung der Erfindung sind zur Vermeidung dieses Problems räumlich nahe beieinanderliegende Teilnehmerstationen zu Gruppen zusammengefasst, die jeweils über Daten- und Steuerleitungen miteinander verbunden sind, die paarweise ausgeführt sind. Die beiden Leitungen der einzelnen Leitungspaare sind über Entkopplungsglieder parallel an die Teilnehmerstationen einer Gruppe angeschlossen. Die jeweils ersten Leitungen und die jeweils zweiten Leitungen der die Teilnehmerstationengruppen verbindenden Daten- und Steuerleitungen sind über je eine Verstärker enthaltende Leitung miteinander verbunden, wobei die in den ersten Leitungen liegenden Verstärker in der einen Übertragungsrichtung wirksam sind und die Verstärker, die in den zweiten Leitungen liegen in entgegengesetzter Richtung. In die Leitungen, welche die Teilnehmerstationengruppen verbinden, können galvanische Trennglieder geschaltet sein.

Anhand der Zeichnung, in der Ausführungsbeispiele dargestellt sind, werden im folgenden die Erfindung sowie weitere Vorteile und Ergänzungen näher beschrieben und erläutert.

Es zeigen:

Fig. 1 das Prinzipschaltbild eines Ausführungsbeispiels der Erfindung,

Fig. 2 Einzelheiten eines in der Anordnung nach Fig. 1 verwendeten Taktgebers,

Fig. 3 Diagramme von Signalen, die in der Anordnung nach Fig. 1 auftreten,

Fig. 4 das Prinzipschaltbild eines Ausführungsbeispiels mit räumlich weit verteilten Teilnehmerstationen.

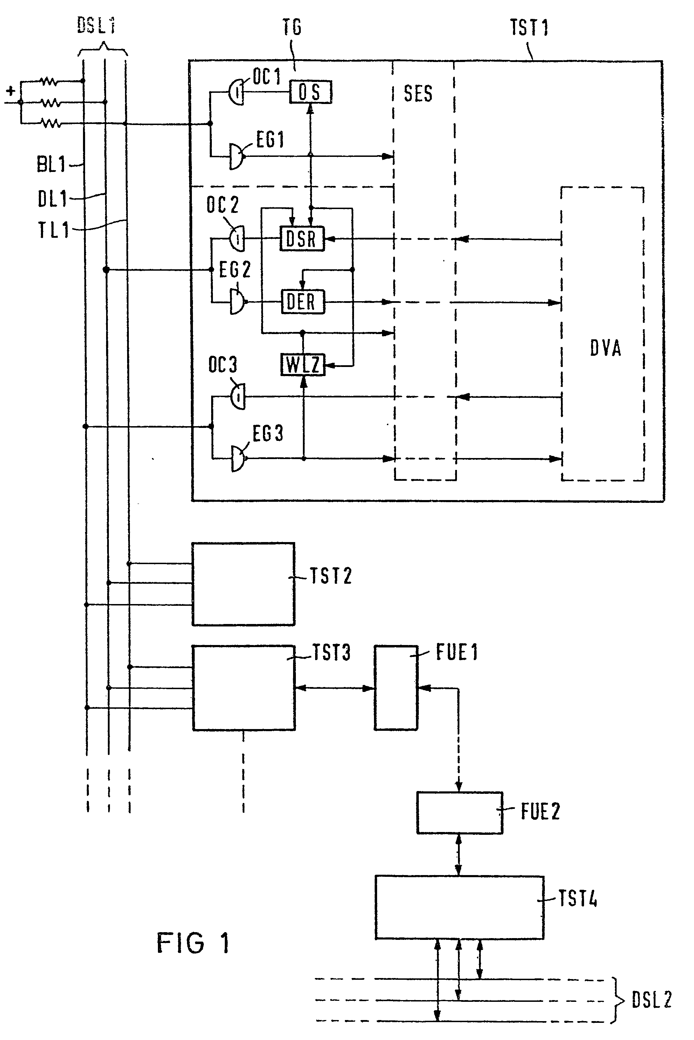

In Fig. 1 sind mit TST1, TST2, TST3 und TST4 Teilnehmerstationen eines Datenverarbeitungssystems, z.B. eines Fernwirksystems, bezeichnet. Zwischen ihnen sollen Daten übertragen werden. Hierzu sind die Stationen TST1, TST2 und TST3 an Daten- und Steuerleitungen DSL1 angeschlossen. Mit den Leitungen DSL1 können weitere Stationen verbunden sein. Die Teilnehmerstation TST4 liegt an Daten- und Steuerleitungen DSL2, über welche sie zu weiteren, nicht dargestellten Stationen Daten übertragen und von diesen empfangen kann.

Die einzelnen Teilnehmerstationen sind in gleicher Weise aufgebaut, so dass es genügt, Aufbau und Funktion der Station TST1 zu beschreiben. Sie enthält einen steuerbaren Oszillator OS, der sein Ausgangssignal über ein Gatter OC1, das im Prinzip nichts anderes ist als ein Transistor mit offenem Kollektor, auf eine Taktleitung TL1 gibt. Die auf dieser Leitung TL1 stehenden Signale gelangen über ein Eingabegatter EG1, das als Trennglied dient, auf den Steuereingang des Oszillators OS. Da die Taktgeber TG aller Teilnehmerstationen ihr Signal über einen Transistor mit offenem Kollektor auf die Taktleitung TL1 geben, kann auf dieser Leitung erst dann «H»-Signal entstehen, wenn alle Gatter OC1 «H»-Signal abgeben. Erst dann tritt auch das Synchronisationssignal am Steuereingang des Oszillators OS auf, und zwar nicht nur in der Teilnehmerstation TST1, sondern in allen anderen an die Daten- und Steuerleitungen DSL1 angeschlossenen Stationen. Wird «H»-Signal als log. «O» und «L»-Signal als log. «1» definiert, bilden die Gatter OC1 der Taktgeber ein ODER-Glied. Definiert man dagegen «H»-Signal als log. «1» und «L»-Signal als log. «0», so stellen die Gatter OC1 UND-Glieder dar.

Mit dem auf der Taktleitung TL1 erzeugten Taktsignal wird die Datenübertragung gesteuert. Die eigentlichen Datenquellen und -senken sind Datenverarbeitungsanordnungen DVA, die die zu sendenden Informationen auf Sende- und Empfangssteuerungen SES geben und von diesen Steuerungen auch die zu empfangenden Informationen erhalten. Die zu sendenden Daten werden in ein Datensenderegister DSR eingetragen. Von diesem Register werden sie im Takt des auf der Taktleitung TL1 erzeugten Signals über ein Ausgabegatter OC2, das wiederum ein Transistor mit offenem Kollektor ist, auf eine Datenleitung DL1 gegeben. Die auf dieser Leitung DL1 liegenden Signale gelangen über ein als Trennglied dienendes Eingabegatter EG2 auf ein Dateneingaberegister DER, in das sie ebenfalls im Takt der auf der Taktleitung TL1 erzeugten Signale eingelesen werden. Vom Dateneingaberegister DER werden sie über die Sende- und Empfangssteuerung SES in die Datenverarbeitungsanordnung DVA übernommen. Da die Daten in Wörtern bestimmter Länge übertragen werden, ist ein Wortlängenzähler WLZ vorhanden, der das Ausgeben der Daten aus dem Datensenderegister DSR steuert. Zur Kennzeichnung des Wortanfangs und -endes kann ein Begleitsignal verwendet werden, das über ein Ausgabegatter OC3, ebenfalls ein Transistor mit offenem Kollektor, auf eine Begleitsignalleitung BL1 geschaltet wird. Ein Eingabegatter EG3 überträgt die Begleitsignale zur Sende- und Empfangssteuerung SES, von der sie zur Datenverarbeitungsanordnung DVA weitergegeben werden können. Mit dem empfangenen Begleitsignal kann der Wortlängenzähler WLZ gesteuert, z.B. auf Null rückgesetzt werden.

In Datenübertragungsanordnungen der in Fig. 1 gezeigten Art ist es häufig erwünscht, dass Teilnehmerstationen sich spontan melden können, z.B. im Falle eines Alarms. Solche Meldungen können z.B. an bestimmten Stellen eines Wortes eingeblendet werden. Beispielsweise kann ein Wort eine Länge von 32 Bits haben, von denen die ersten 4 Bits zum Eintragen von Meldungen vorgesehen sind. Der Wortlängenzähler WLZ gibt dann während der ersten 4 Bits das Datensenderegister DSR in jedem Falle frei, unabhängig davon, ob die zugehörige Teilnehmerstation an einer laufenden Datenübertragung beteiligt ist oder nicht. Dadurch, dass als Ausgabegatter OC2 ein Transistor mit offenem Kollektor verwendet ist, wird im Falle einer Meldung auf jeden Fall auf der Datenleitung DL1 «L»-Signal erzeugt. Mit diesem Signal oder einer Kombination von Signalen, die über die Eingabegatter EG2 in die Datenempfangsregister DER übernommen werden, kann gemeldet werden, dass von einer Teilnehmerstation ein Alarm einer bestimmten Priorität gemeldet wird. Es kann gleichzeitig auch die Adresse der den Alarm meldenden Station übermittelt werden. Zusätzlich kann aus den Meldesignalen erkannt werden, welche Massnahmen zu treffen sind, z.B.. dass bestimmte Informationen von der Station TST1 zur Station TST4 zu übertragen sind.

An die Teilnehmerstationen TST3 und TST4 sind Fernübertrager FUE1 und FUE2 angeschlossen, die dazu dienen, die von den Stationen TST3, TST4 ausgegebenen Signale in serielle Signale umzuwandeln und über weite Strecken zu übertragen sowie die vom jeweils anderen Fernübertrager empfangenen Signale aufzunehmen und der jeweils zugeordneten Teilnehmerstation zu übergeben. Auf diese Weise können auch Daten zwischen den Daten- und Steuerleitungen DSL1 und DSL2 ausgetauscht werden.

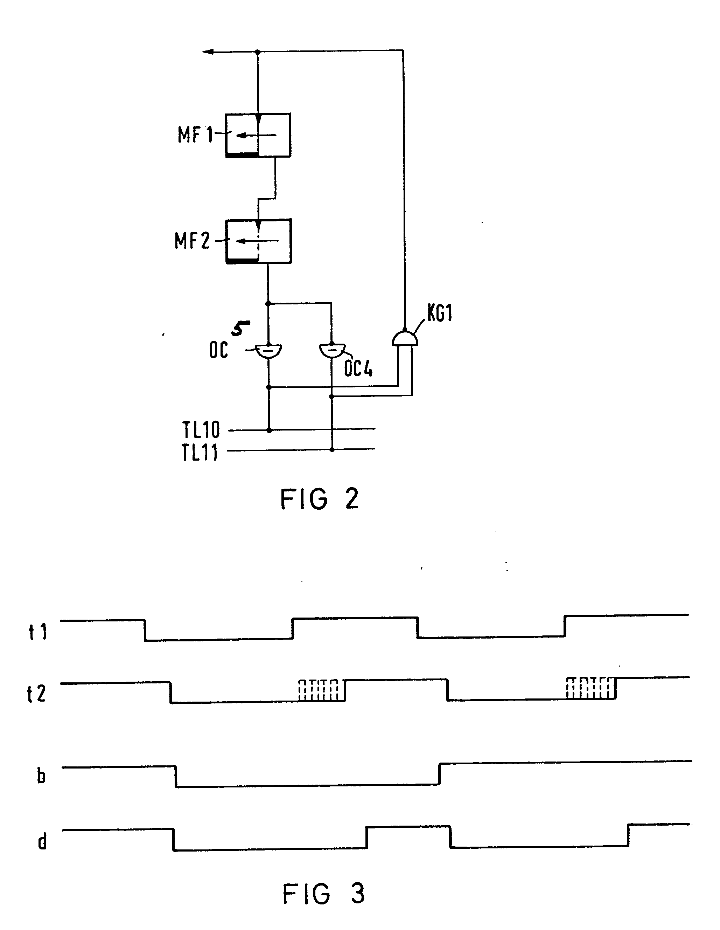

Fig. 2 zeigt ein Ausführungsbeispiel eines Taktgebers. Er besteht im wesentlichen aus zwei monostabilen Kippstufen MF1, MF2, die hintereinandergeschaltet sind und abwechselnd in den astabilen Zustand geschaltet werden. An den Ausgang der Kippstufe MF2 sind zwei Ausgabegatter OC4, OC5 angeschlossen, die jeweils aus einem Transistor mit offenem Kollektor bestehen und die mit Taktleitungen TL10, TL11 verbunden sind. Ihre Ausgänge liegen ferner an den Eingängen eines Koinzidenzgliedes KG1, dessen Ausgangssignal dem Steuereingang der Kippstufe MF1 sowie weiteren Baueinheiten der zugehörigen Teilnehmerstation zugeführt ist. Zunächst sei die Taktleitung TL11 und das Ausgabegatter OC4 weggelassen. Ferner sei angenommen, dass die Kippstufe MF2 in den stabilen Zustand umschaltet, so dass dem Ausgabegatter OC3 «L»-Signal zugeführt wird und sein Ausgang daher stromlos wird. Sobald alle an die Leitung TL10 angeschlossenen Ausgabegatter stromlos sind, entsteht auf der Leitung TL10 «H»-Signal, welches die Kippstufe MF1 in den astabilen Zustand schaltet. Die Dauer dieses Zustandes wird durch die Zeitkonstante der Kippstufe MF1 bestimmt. Das beim Umschalten der Kippstufe MF1 an deren Ausgang auftretende «H»-Signal ist für die Kippstufe MF2 unwirksam, so dass diese im stabilen Zustand beharrt. Nach Ablauf ihrer Zeitkonstante kippt die Stufe MF1 in den stabilen Zustand zurück, und mit der dabei auftretenden negativen Flanke wird die Kippstufe MF2 in den astabilen Zustand geschaltet, d.h. dem Ausgabegatter OC5 wird «H»-Signal zugeführt, so dass das Signal auf der Leitung TL10 auf «L» gezogen wird. Dieses Umschalten ist für die Kippstufe MF1 unwirksam. Erst wenn die astabile Phase der Kippstufe MF2 abgelaufen ist und die Ausgabeglieder OC5 aller Teilnehmerstationen mit «L»-Signal angesteuert sind, wird die Kippstufe MF1 wieder in den astabilen Zustand geschaltet.

Anhand der in Fig. 3 gezeigten Impulsdiagramme soll im folgenden die Funktion der in Fig. 1 dargestellten Anordnung näher erläutert werden. Das Diagramm t1 zeigt den zeitlichen Verlauf der Ausgangsimpulse des Impulsgebers einer Teilnehmerstation. Im folgenden bleibe zunächst dieses Diagramm unbeachtet. Die durchgezogene Linie des Diagrammes t2 zeigt den Verlauf des auf der Taktleitung TL1 liegenden Signals. Mit gestrichelten Linien ist angedeutet, welchen Verlauf die Ausgangssignale der einzelnen Taktgeber hätten, wenn sie nicht über die Leitung TL1 verkoppelt wären. Die Verkopplung bewirkt, dass der Taktgeber, dessen Ausgangssignal zuerst auf «L»-Signal geht, den Zeitpunkt der negativen Flanke und der Taktgeber, dessen Ausgangssignal zuletzt auf «H»-Signal geht, die positive Flanke des Signals auf der Taktleitung TL1 bestimmt.

Mit der negativen Flanke des Taktsignals t2 werden die Datensignale d auf die Datenleitung DL1 geschaltet. Gleichzeitig wird das Begleitsignal b «L»-Signal. Im Ausführungsbeispiel bedeutet dies, dass das Datensignal eine Meldung ist. Mit der positiven Flanke des Taktsignals t2 wird das Datensignal d zurückgenommen. Mit der nächsten negativen Flanke des Taktsignals t2 wird das Begleitsignal b «H» und das Datensignal d wieder «L». Dies bedeutet, dass das Datensignal eine andere Information als eine Meldung ist. Die jeweils Daten empfangende Station lässt ihren Taktgeber erst dann «L»-Signal auf die Taktleitung TL1 geben, wenn das zuvor zugeführte Datensignal aufgenommen ist. Das Begleitsignal b wird auf «H» gesetzt, bevor das Datensignal d auf «L» geht. Der kurze Zwischenzustand b = «H» und d = «H» kennzeichnet den Beginn eines Datenwortes.

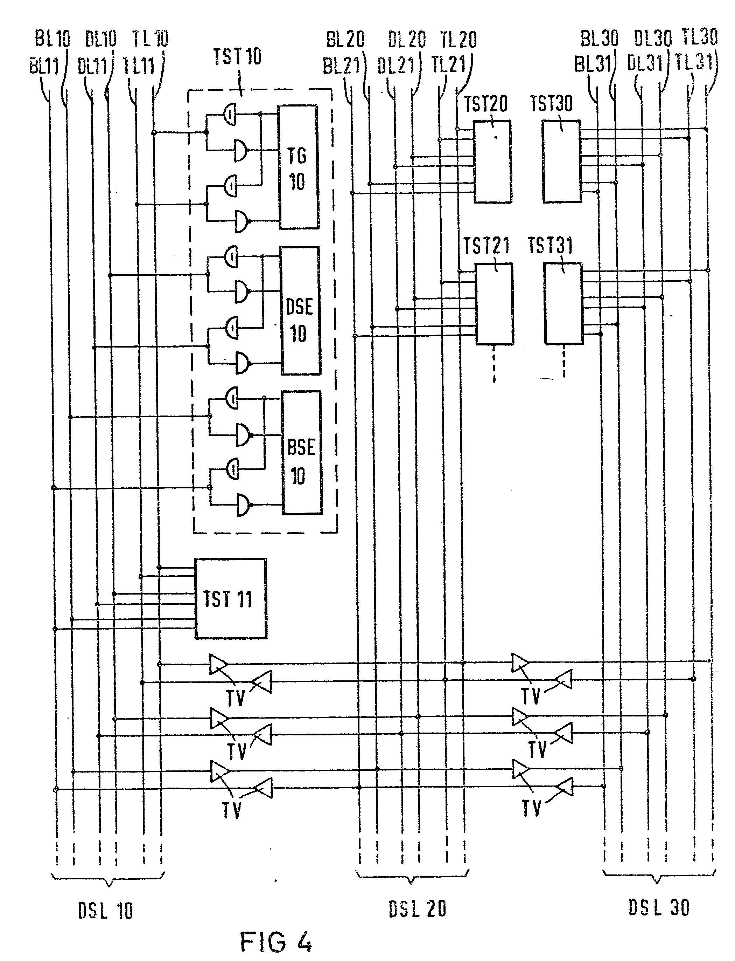

In der anhand der Fig. 1 beschriebenen Datenübertragungsanordnung treten Probleme hinsichtlich der Übertragungsgeschwindigkeit auf, wenn die an die Daten- und Steuerleitung DSL1 bzw. an die Leitung DSL2 angeschlossenen Teilnehmerstationen räumlich weit auseinanderliegen. Fig. 4 zeigt eine Anordnung, mit der dieses Problem gelöst ist. Die räumlich nahe beieinanderliegenden Teilnehmerstationen TST10, TST12 bzw. TST20, TST21 bzw. TST30, TST31 sind zu Gruppen zusammengefasst, denen jeweils Daten- und Steuerleitungen TSL10, TSL20 bzw. TSL30 zugeordnet sind. Diese Daten- und Steuerleitungen unterscheiden sich von denen der Anordnung nach Fig. 1 dadurch, dass sie paarweise aufgebaut sind. Der Taktgeber TG10 der Teilnehmerstation TST10 ist somit an ein Paar Taktleitungen TL10, TL11, Datensende- und Empfangseinheit DSE10 der Station TST10 an ein Paar Datenleitungen DL10, DL11 und die Begleiter-, Sende- und Empfangseinheit BSE10 an ein Paar Begleitsignalleitungen BL10, BL11 angeschlossen. Mit diesen drei Paar Takt-, Daten- und Begleiterleitungen ist die Teilnehmerstation TST11 in gleicher Weise verbunden. Eine entsprechende Gruppe bilden die Teilnehmerstationen TST20, TST21 sowie weitere, nicht dargestellte Teilnehmerstationen, die alle über ein Paar Taktleitungen TL20, TL21, Datenleitungen DL20, DL21 und Begleitsignalleitungen BL20, BL21 miteinander verbunden sind. Eine dritte Gruppe wird von den Teilnehmerstationen TST30, TST31 so wie nicht gezeichneten Stationen und Taktleitungen TL30, TL31, Datenleitungen DL30, DL31 und Begleitsignalleitungen BL30, BL31 gebildet. Die entsprechenden Takt-, Daten- und Begleiterleitungen der drei Gruppen sind über Leitungen miteinander verbunden, in die Trennverstärker TV geschaltet sind. Diese bewirken, dass die Änderung des Signalpegels auf den langen Verbindungsleitungen zwischen den einzelnen Gruppen beschleunigt wird. Es können daher auch Datensignale zwischen einer Vielzahl von räumlich weit verteilten Teilnehmerstationen mit hoher Geschwindigkeit übertragen werden.

Im folgenden wird die Wirkung beschrieben, welche die Paarbildung der Daten- und Steuerleitungen und die Trennverstärker haben. Aus Fig. 2 ist ersichtlich, dass die Ausgangssignale der Taktgeber über zwei Ausgabegatter OC4, OC5 auf das Taktleitungspaar TL10, TL11 gegeben werden. Die auf dem Taktleitungspaar auftretenden Signale werden in einem Koinzidenzglied KG1 miteinander verknüpft, d.h. der aus den beiden monostabilen Kippstufen MF1, MF2 gebildete astabile Multivibrator wird erst dann freigegeben, wenn auf beiden Taktleitungen «H»-Signal erscheint. Bei der in Fig. 4 gezeigten Schaltung der Teilnehmerstationen wird das Taktsignal auf der Leitung TL10 dem auf der Leitung TL11 wegen der kürzeren Laufzeiten voreilen. Die beiden Diagramme t1 und t2 der Fig. 3 veranschaulichen dies. t1 zeigt in diesem Falle den Verlauf des Signals auf der Leitung TL10, t2 den des Signals auf der Leitung TL11. Mit gestrichelten Linien ist der Signalwechsel innerhalb der einzelnen Gruppen angedeutet. Erst dann, wenn die Signale t1 und t2 beide auf «H»-Signal sind, ist die Koinzidenzbedingung am Eingang des Koinzidenzgliedes KG1 (Fig. 2) erfüllt, und die Taktgeber werden freigegeben. Es ist also sichergestellt, dass auch bei einem so verzweigten System, wie dem nach

Fig. 4, die Taktgeber aller Teilnehmerstationen synchronisiert sind und eine Datenübertragung erfolgt, wenn die Teilnehmerstationen aufnahmebereit sind. Da die Daten- und Begleiter-, Sende- und Empfangseinheiten in gleicher Weise wie die Taktgeber an die Leitungspaare der Daten- und Steuerleitungen angeschlossen sind, erübrigt sich eine Beschreibung der Aus- und Eingabegatter. Auch die Kopplung der Daten- und Begleiterleitungen der einzelnen Gruppen entspricht der der Taktleitungen. Einander entsprechende Daten- und Begleiterleitungen sind miteinander verbunden, wobei in die Verbindungsleitungen Verstärker geschaltet sind. Die Verstärker zwischen den einen Leitungen der Leitungspaare verstärken die Signale in der einen Richtung, die Verstärker in den Verbindungsleitungen zwischen den anderen Leitungspaaren in der entgegengesetzten Richtung. Zusätzlich können in den Verbindungsleitungen Optokoppler oder andere galvanisch trennende Elemente angeordnet sein.

**Patentansprüche**

1. Anordnung zum Übertragen von Datensignalen zwischen Teilnehmerstationen (TST1, TST2...), die an gemeinsame Daten- und Steuerleitungen (DL1, TL1) angeschlossen sind, wobei zumindest die Signale auf den Steuerleitungen durch ODER- bzw. UND-Verknüpfung der Ausgangssignale der Teilnehmerstationen gebildet sind und die jeweils Daten sendende Station die Datensignale in einer bestimmten Phase eines auf eine Steuerleitung gegebenen Steuersignals auf die Datenleitungen schaltet und wobei die die Daten empfangenden Stationen den Empfang der Daten und die Bereitschaft zum Empfang neuer Daten anzeigende Steuersignale zur sendenden Station übertragen, worauf diese die Datensignale von der Datenleitung zurücknimmt und neue Daten aufschaltet, dadurch gekennzeichnet, dass die Teilnehmerstationen (TST1, TST2...) Taktgeber (TG) enthalten, welche über eine gemeinsame Taktleitung (TL1) sich gegenseitig synchronisieren, indem die Signale (t) auf der Taktleitung (TL1) durch ODER-Verknüpfung bzw. UND-Verknüpfung der Ausgangssignale der Taktgeber gebildet sind und die Taktgeber (TG) in einer bestimmten Taktphase so lange gesperrt sind, bis alle Taktgeber dieselbe Taktphase erreicht haben, wobei die Datensignale sendende Station in einer bestimmten Taktphase die Datensignale (d) auf die Datenleitung schaltet, und dass die jeweilige die Datensignale empfangende Station den in ihr enthaltenen Taktgeber (TG) erst dann freigibt, wenn die Datensignale übernommen sind.

2. Anordnung nach Anspruch 1, dadurch gekennzeichnet, dass die Taktgeber (TG) aus einer astabilen Kippstufe bestehen, die von den auf der Taktleitung (TL1) liegenden Signalen freigegeben oder gesperrt sind.

3. Anordnung nach Anspruch 2, dadurch gekennzeichnet, dass die Taktgeber jeweils aus zwei monostabilen Kippstufen (MF1, MF2) bestehen, die hintereinandergeschaltet sind und von denen eine (MF1) von dem auf der Taktleitung liegenden Signal freigegeben bzw. gesperrt ist.

4. Anordnung nach einem der Ansprüche 1 bis 3, dadurch gekennzeichnet, dass die Datensignale über eine ODER-Verknüpfung auf die Datenleitung (DL1) geschaltet sind und Meldesignale zu vorbestimmten Zeiten von jeder Teilnehmerstation (TST1, TST2...) auf die Datenleitung (DL1) schaltbar sind.

5. Anordnung nach Anspruch 4, dadurch gekennzeichnet, dass die Datensignale in Sätzen mit jeweils vorbestimmter Länge übertragen werden, dass die Teilnehmerstationen (TST1, TST2...) Wortlängenzähler (WLZ) enthalten, welche die Impulse der Taktgeber (TG) aufsummieren und mit Beginn der Übertragung eines Satzes gestartet werden, und dass bei bestimmten Zählerständen jede Teilnehmerstation (TST1, TST2...) zum Aufschalten von Meldesignalen auf die Datenleitung (DL1) freigegeben ist.

6. Anordnung nach Anspruch 5, dadurch gekennzeichnet, dass die Daten- und Steuerleitungen (DSL1) eine Begleitsignalleitung (BL1) aufweisen, auf die Begleitsignale (b) gegeben sind, die den Beginn der Datenwörter kennzeichnen.

7. Anordnung nach einem der Ansprüche 4 bis 6, dadurch gekennzeichnet, dass die Daten- und Steuerleitungen (DSL1) eine Begleitsignalleitung aufweisen, auf die Begleitsignale gegeben sind, welche die Art der übertragenen Daten kennzeichnen.

8. Anordnung nach einem der Ansprüche 4 bis 7, dadurch gekennzeichnet, dass jede Teilnehmerstation ein Melderegister enthält, in das die auf die Datenleitung (DL1) gegebenen Meldungen eingetragen werden.

9. Anordnung nach einem der Ansprüche 1 bis 8, dadurch gekennzeichnet, dass räumlich nahe beieinanderliegende Teilnehmerstationen (TST10, TST11; TST20, TST21; TST30, TST31) zu Gruppen zusammengefasst sind, die jeweils über Daten- und Steuerleitungen (DSL10, DSL20, DSL30) verbunden sind, die paarweise ausgeführt sind, dass die Teilnehmerstationen einer Gruppe an die Leitungen der Leitungspaare (TL10, TL11; DL10, DL11; BL10, BL11; ...) über Entkopplungsglieder parallel angeschlossen sind und dass die ersten Leitungen (TL10, TL20, TL30; DL10, DL20, DL30; ...) der einander entsprechenden Leitungspaare der die Teilnehmerstationen einer Gruppe verbindenden Daten- und Steuerleitungen sowie die zweiten Leitungen (TL11, TL21, TL31; DL11, DL21, DL31; ...) der einander entsprechenden Leitungspaare über Verbindungsleitungen miteinander verbunden sind, in die Verstärker (TV) mit jeweils entgegengesetzter Übertragungsrichtung geschaltet sind.

10. Anordnung nach Anspruch 9, dadurch gekennzeichnet, dass in die Verbindungsleitungen galvanische Trennglieder geschaltet sind.

**Claims**

1. Arrangement for the transmission of data signals between subscriber stations (TST1, TST2...) which are connected to common data lines and control lines (DL1, TL1...), wherein at least the signals on the control lines are formed by OR- and AND-operations on the output signals of the subscriber stations and the station which is respectively transmitting data switches the data signals through to the data lines in a particular phase of a control signal switched on to a control line, and wherein the stations, which are receiving data, transmit control signals which indicate the receipt of date and the readiness to receive new data, to the transmitting station whereupon the latter receives the data signals from the data line and switches through new data, characterised in that the subscriber stations (TST1, TST2 ...) comprise clock pulse generators (TG) which synchronise each other by means of a common clock pulse line (TL1) where the signals on the clock pulse line (TL1) are formed by OR-operation and AND-operation on the output signals of the clock pulse generators and the clock pulse generators (TG) are stopped in a particular clock pulse phase until all clock pulse generators have reached the same clock pulse phase, where the station which is transmitting the data signals switches through the data signals (d) to the data line in a particular clock pulse phase, and that the respective station which is receiving the data signals only releases the clock pulse generator (TG) which it comprises, when the data signals have been received.

2. Arrangement as claimed in claim 1, characterised in that the clock pulse generators (TG) consist of an astable flip-flop which is unblocked or blocked by the signals on the clock pulse line (TL1).

3. Arrangement as claimed in claim 2, characterised in that the clock pulse generators respectively consist of two mono-stable flip-flops (MF1, MF2) which are connected in series and of which one (MF1) is unblocked and blocked by the signal on the clock pulse line.

4. Arrangement as claimed in one of the claims 1 to 3, characterised in that the data signals are switched through to the data line (DL1) by means of an OR-operation and message signals can be switched through to the data line (DL1) by each subscriber station (TST1, TST2...) at predetermined times.

5. Arrangement as claimed in claim 4, characterised in that the data signals are transmitted in sets which each have a predetermined length, that the subscriber stations (TST1, TST2...) comprise word length counters (WLZ) which sum the pulses of the clock pulse generators (TG) and are started at the beginning of the transmission of a set, and that at specific counts, each subscriber station (TST1, TST2...) is unblocked for switching through message signals to the data line (DL1).

6. Arrangement as claimed in claim 5, characterised in that the data and control lines (DSL1) have an accompanying signal line (BL1) to which accompanying signals (b) which characterise the beginning of the data words are transferred.

7. Arrangement as claimed in one of the claims 4 to 6, characterised in that the data and control lines (DSL1) have an accompanying signal line to which accompanying signals which characterise the type of transmitting data are transferred.

8. Arrangement as claimed in one of the claims 4 to 7, characterised in that each subscriber station comprises a message register into which the messages which are switched through to the data line (DL1) are entered.

9. Arrangement as claimed in one of the claims 1 to 8, characterised in that subscriber stations (TST10, TST11; TST20, TST21; TST30, TST31) which are spatially close to one another are combined to form groups which are respectively connected via data and control lines (DSL10, DSL20, DSL30) which form pairs, that the subscriber stations of one group are connected in parallel to the lines of pairs of lines (TL10, TL11; DL10, DL11; BL10, BL11;...) by means of decoupling elements and that the first lines (TL10, TL20, TL30; DL10, DL20, DL30;...) of the identical pairs of lines of the data and control lines which connect the subscriber stations of one group, and the second lines (TL11, TL21, TL31; DL21, DL31;...) of the identical pairs of lines are connected to one another by means of connection lines into which amplifiers (TV) which respectively have opposite transmission directions are switched.

10. Arrangement as claimed in claim 9, characterised in that DC blocking elements are inserted into the connection lines.

## Revendications

1. Dispositif pour transmettre des signaux de données entre des postes d'abonnés (TST1, TST2...) qui sont reliés à des lignes de transmission des données et de commande (DL1, TL1) communes du type dans lequel au moins les signaux transmis par des lignes de commande sont formés par combinaison logique OU et ET des signaux de sortie des postes d'abonnés, alors que le poste émettant des données applique les signaux de données aux lignes de transmission de données dans une phase déterminée d'un signal de commande appliqué à une ligne de commande, et dans lequel les postes qui reçoivent les données transmettent au poste émetteur des signaux de commande signalant la réception des données et la disponibilité à recevoir de nouvelles données, à la suite de quoi ledit poste émetteur reprend les signaux de données de la ligne de transmission de données et y applique de nouvelles données, caractérisé par le fait que les postes d'abonnés (TST1, TST2...) comportent des générateurs de cadence (TG) qui se synchronisent mutuellement, par l'intermédiaire d'une ligne de cadence commune (TL1) en ce sens que les signaux sur la ligne de cadence (TL1) sont formés par combinaison logique OU ou par combinaison logique ET des signaux de sortie des générateurs de cadence et que les générateurs de cadence (TG) sont, dans une phase de cadence déterminée, bloqués jusqu'à ce que tous les générateurs de cadence atteignent la même phase de cadence, le poste qui émet les signaux de données appliquant, dans une phase de cadence donnée, les signaux de données (d) à la ligne de transmission de données et que le poste qui reçoit les signaux de données libère le générateur de cadence (TG) qu'il contient seulement après que les signaux de données aient été pris en charge.

2. Dispositif selon la revendication 1, caractérisé par le fait que les générateurs de cadence (TG) sont constitués par un étage à bascule astable qui est libéré ou bloqué par les signaux sur la ligne de cadence (TL1).

3. Dispositif selon la revendication 2, caractérisé par le fait que les générateurs de cadence sont chacun constitués par deux étages à bascule monostable (MF1, MF2) qui sont montés l'un à la suite de l'autre et dont l'un (MF1) est libéré ou bloqué par le signal sur la ligne de cadence.

4. Dispositif selon l'une des revendications 1 à 3, caractérisé par le fait que les signaux de données sont appliqués, par l'intermédiaire d'un circuit OU, à la ligne de transmission de données (DL1), des signaux de message étant susceptibles d'être appliqués à la ligne de transmission de données (DL1), à des instants déterminés à l'avance, par chaque poste d'abonné (TST1, TST2...).

5. Dispositif selon la revendication 4, caractérisé par le fait que les signaux de données sont transmis suivant des articles de longueur prédéterminée, que les postes d'abonnés (TST1, TST2...) comportent des compteurs de longueurs de mots (WLZ) qui additionnent les impulsions des générateurs de cadence (TG) et qui sont démarrés avec le début de la transmission d'un article, et que pour des états de comptage déterminés, chaque poste d'abonné (TST1, TST2...) est libéré pour appliquer les signaux de message à la ligne de transmission de données (DL1).

6. Dispositif selon la revendication 5, caractérisé par le fait que les lignes de transmission de données et de commande (DSL1) comportent une ligne de signaux d'accompagnement (BL1) à laquelle sont appliqués les signaux d'accompagnement (b) qui caractérisent le début des mots de données.

7. Dispositif selon l'une des revendications 4 à 6, caractérisé par le fait que les lignes de transmission de données et de commande (DSL1) comportent une ligne de signaux d'accompagnement à laquelle sont appliqués les signaux d'accompagnement qui caractérisent le genre de donnée transmis.

8. Dispositif selon l'une des revendications 4 à 7, caractérisé par le fait que chaque poste d'abonné comporte un registre de messages dans lequel sont enregistrés les messages qui sont appliqués à la ligne de transmission de données (DL1).

9. Dispositif selon l'une des revendications 1 à 8, caractérisé par le fait que des postes d'abonnés (TST10, TST11; TST20, TST21; TST30, TST31) qui sont voisins dans l'espace, sont assemblés par groupes qui sont reliés respectivement par l'intermédiaire de lignes de transmission de données et de commande (DSL10, DSL20, DSL30) réalisées par paires, que les postes d'abonnés d'un groupe sont reliés en parallèle aux lignes et paires de lignes (TL10, TL11; DL10, DL11; BL10, BL11;...) par l'intermédiaire d'éléments de découplage et que les premières lignes (TL10, TL20, TL30; DL10, DL20, DL30;...) des lignes de transmission de données et de commande qui relient les paires de lignes qui se correspondent des postes d'abonnés d'un groupe, ainsi que des secondes lignes (TL11, TL21, TL31; DL11, DL21, DL31;...) des paires de lignes qui se correspondent sont reliées entre elles par l'intermédiaire de lignes de liaison dans lesquelles sont montés des amplificateurs (TV) ayant respectivement des directions de transmission opposées.

10. Dispositif selon la revendication 9, caractérisé par le fait que dans les lignes de liaison sont montés des éléments séparateurs galvaniques.

FIG 1

FIG 2

FIG 3

FIG 4